# EUROPEAN PATENT SPECIFICATION

(11) **EP 3 088 152 B1**
(45) Date of publication and mention of the grant of the patent: **15.04.2020**
(21) Application number: 15382219.2
(22) Date of filing: 30.04.2015
(51) Int. Cl.: B29C 33/04, B29C 33/08, B29C 70/48, B29C 35/12, B29C 65/00, B29C 35/16

(54) **METHOD FOR MANUFACTURING COMPOSITE PARTS AND FORM**
VERFAHREN ZUR HERSTELLUNG VON VERBUNDTEILEN UND FORM
PROCÉDÉ DE FABRICATION DE PIÈCES COMPOSITES ET MOULE

(43) Date of publication of application: 02.11.2016
(73) Proprietor: Airbus Operations, S.L., 28906 Getafe Madrid (ES)
(72) Inventor: Pinillos Martínez, Ricardo, 28906 Getafe (ES); García Solares, Victor, 28906 Getafe (ES); Muñoz López, Pilar, 28906 Getafe (ES); Pérez Sánchez, Melania, 28906 Getafe (ES)
(74) Representative: Elzaburu S.L.P.

(56) References cited:
- EP-A1- 0 770 463
- EP-A1- 1 074 466
- EP-A1- 1 090 732
- US-A1- 2009 115 088

## Description

### FIELD OF THE INVENTION

The present invention refers to a method for manufacturing parts made of carbon fibre reinforced polymers.

### BACKGROUND OF THE INVENTION

The following manufacturing methods for joining two composite parts are known in the state of the art.
- Co-curing. Join between two fresh parts with chemical cross-linking. Although this method produces a high quality join between the parts it has the drawback that for complex parts (high level of integration) is difficult to obtain a piece without defects as it works better when the join is simple.
- Co-bonding. Join between fresh and cured part with chemical cross-linking plus adhesive join. This method has the drawback that it is difficult to control the thickness and the homogeneous distribution of the bonding line between the joined parts. Additionally, some bonding secondary and preparatory operations are necessary as, for instance, providing an adhesive layer to perform the join, the use of a release fabric to be peeled off before the adhesion and sometimes the surfaces need to be sanded and cleaned before bonding. As a consequence, said method implies high lead times and recurrent costs and a high number of steps have to be performed for achieving a quality join.
- Secondary bonding. Join between two cured parts with adhesive join. It has the drawback that it is difficult to assure a homogeneous bonding line distribution, which leads to an unproper adhesive performance. Therefore, rivets are required after the join to prevent adhesive fails. Additionally, bonding secondary and preparatory operations are needed as, for instance, providing an adhesive layer and sometimes the surface ready to join need to be sanded before the bonding.

It is known document EP1074466 that discloses reinforcing textile sheets that are superposed on mandrels. The reinforcing textile sheets superposed on the mandrels are placed in a closed jig. A thermosetting resin is introduced into the closed jig to impregnate the superposed reinforcing textile sheets. The thermosetting resin impregnated into the superposed reinforcing textile sheets is made to half-set in the closed jig to form a half-set composite material wing component member including a rear spar, ribs, an upper skin and a lower skin. The half-set composite material wing component member is taken out of the jig and the mandrel is removed from the half-set composite material wing component member. The half-set composite material wing component member and a half-set front spar are bonded together with an adhesive to form a half-set wing structure. The half-set wing structure is subjected to a high-temperature setting process to set the wing structure and the adhesive simultaneously.

It is also known document US2009/115088 that discloses a process for producing a substantially shell-shaped component, from substantially carbon-fiber-reinforced synthetic material having at least one local reinforcing zone and at least one stiffening element, in particular a fuselage shell, a wing shell, a vertical stabilizer shell or horizontal stabilizer shell of an aircraft or the like. The comprises the following steps: arranging at least one doubler which has already been cured, on an at most partially cured shell skin to form the local reinforcing zone, applying at least one stiffening element which has already been cured, and placing at least one at most partially cured connecting angle bracket against the at least one stiffening element at least in the region of the at least one doubler, and curing the shell skin and the connecting angle bracket.

It is also known document EP0770463 that discloses a process for moulding high strength elongated parts made of a fibre-resin composite material, especially turbomachine blades such as fan blades, is disclosed wherein a plurality of heating and cooling elements are arranged within the body of the mould at intervals along the length of the mould cavity, and the liquid resin which is injected at one end into the mould cavity containing the fibre preform is polymerized progressively from the opposite end of the mould cavity, while maintaining the supply of liquid resin under pressure to the cavity, by successively de-activating the cooling elements, which maintain the resin in the liquid state, at predetermined time intervals starting from said opposite end of the mould cavity and progressing in turn towards said one end, and in synchronism therewith successively activating the heating elements to raise the temperature of the resin to the polymerizing temperature progressing in turn from said opposite end to said one end of the mould cavity. The process enables shrink cavities in the finished part to be avoided.

It is finally known document WO2014/112274 disclosing a method for producing a composite material. The composite material being configured from at least two molded article elements, at least one of the molded article elements for configuring the composite material is prepared by being subjected to primary curing. The molded article element subjected to primary curing is assembled to the other molded article element for configuring the composite material with or without an adhesive therebetween, thus preparing an assembled body. The assembled body is heated to at least the glass transition point of the at least one molded article element subjected to primary curing, causing the at least one molded article element to be in a rubbery state. The adhesive in mutual contact with the molded article element or the other molded article element in mutual contact with the molded article element is caused to coexist with the molded article element in the rubbery state by means of a curing process. The at least one molded article element subjected to primary curing is subjected to secondary curing, and the at least one molded article element and the other molded article element are integrated.

### SUMMARY OF THE INVENTION

This invention is focused on manufacturing composite complex parts with a method that achieves a reduction of the manufacturing steps and a reduction of riveted joins.

The claimed method is suitable for joining at least a first part and a second part and it is characterised in that it comprises the following steps:
- providing a first part preform into a resin transfer mould,
- heating said first part into the resing transfer mould for performing a curing cycle of the first part,
- cooling said first part before the curing cycle is completed so that a semi-cured first part is obtained,
- joining the semi-cured first part to a cured prepreg second part for obtaining the final composite part.

The current invention develops a new type of joining: cured composite parts combined with not fully cured parts. This join combine the main features/advantages of co-curing and co-bonding method therefore increasing the quality of the manufacturing method.

The invention allows the manufacturing of not fully cured resin transfer moulding parts (RTM) able to be post-cured and consolidated with traditional cured counterparts with the aim to produce one-shot integrated structures reducing cost and time. Ensuring an adequate degree of cure, the composite first part is able to adapt to the second composite part thickness variations maintaining the geometry without resin bleeding from the semi-cured part.

The joining between the semi-cured first part and the cured prepreg second part could be performed by a mechanical press or by pneumatic or hydraulic means or in an autoclave. Additionally the joining between the semi-cured first part and the cured prepreg second part is performed by inserting a structural adhesive between both parts.

The main advantages of the method object of the invention are:
- High control of the homogeneity and thickness of the bonding line, ensuring a proper mechanical performance of the adhesive joint. Chemical cross-linking as joining mechanism.
- Avoiding bonding secondary and preparatory operations, for instance, adhesive layer lay-up or sanding. Implying high reduction on lead times and recurrent costs of several manufacturing processes.
- Reduce or avoid riveted joins.
- High advantages regarding the storage conditions of the semi-cured part in comparison to un-cured parts.
- High flexibility/adaptability to join parts with complex geometries without internal residual stress.

The semicured resin make the first part deformable at the temperature were prepregs are cured and, therefore, they exhibit the ability to adapt to geometrical changes of the second part such as thickness changes or to absorb dimensional tolerances.

Additionally, it is also an object of the invention a resin transfer mould that comprises a cavity for inserting a composite part preform characterised in that it further comprises a number of independent heat resistances and a cooling sytem that allow a detailed control of the temperature of the composite part during the curing cycle of the first part.

### DESCRIPTION OF THE FIGURES

To complete the description and in order to provide for a better understanding of the invention, a set of drawings is provided. Said drawings form an integral part of the description and illustrate preferred embodiments of the invention. The drawings comprise the following figures.
Figure 1 shows a perspective view of a stringer joined to a skin, the stringer being the first composite part and the skin the second composite part.
Figure 2 shows a cross-section of an embodiment of a mould of resin transfer moulding.
Figure 3 shows a schematic representation with the distribution of a heating resistance in a transversal section of the mould of Figure 2.
Figure 4 shows a schematic representation with the distribution of a cooling fluid flow in a transversal section of the mould of Figure 2.

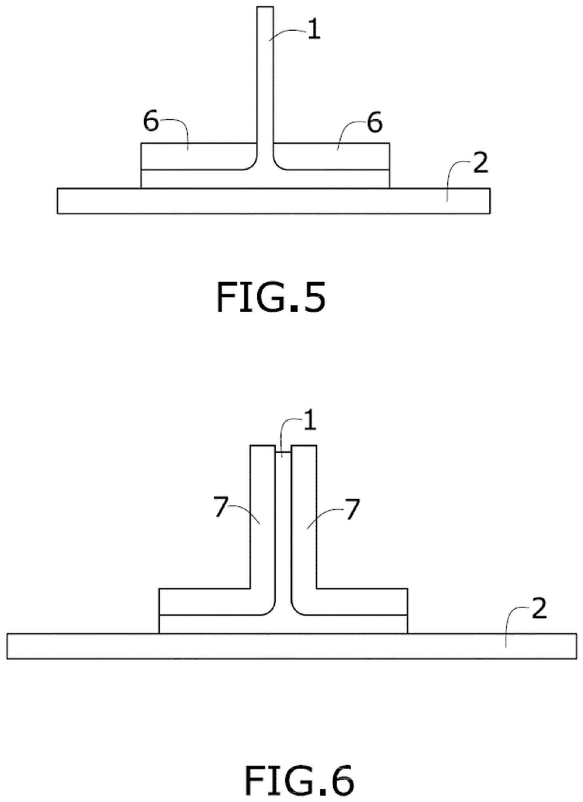

Figure 5 shows a schematic representation of an embodiment disclosing the distribution of caul plates used in the join of the stringer and the skin of Figure 1.
Figure 6 shows a schematic representation of an embodiment disclosing the distribution of caul plates used in the join of the stringer and the skin of Figure 1.
Figure 7 shows a schematic representation of the join between a first composite part and a second composite part.

### DETAILED DESCRIPTION OF THE INVENTION

There are several components that could be manufactured with the claimed method, for instance, stringer integration on wing, HTP and VTP covers, fuselage frames riveted or omega stringers integration on fuselage. The figures accompanying the description disclose a T-stringer (1) joined to a skin (2).

In the shown embodiment the semi-cured material is manufactured by using resin transfer moulding from woven carbon fabrics and epoxy resin (RTM). The glass transition temperature (Tg) of the semi-cured part (1) should lie between two limits. On one hand, the glass transition temperature should be high enough to maintain tackiness and deformability of the first part (1) within acceptable. On the other hand, the glass transition temperature should be low enough to provide the semi-cured part (1) with the adaptability necessary for the subsequent post-cure cycle.

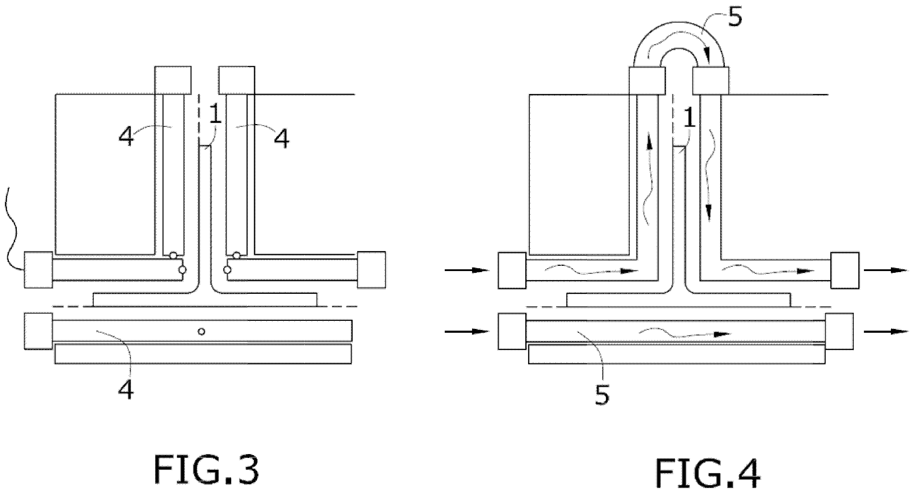

The temperature homogeneity and time control of the RTM process is important for achieving the specific degrees of cure required for the subsequent integration of the first (1) and second (2) part. To this end, the RTM mould (3) is equipped with a number of independent heat resistances (4) which allow a detailed control of the temperature of the first part (1). Figure 3 shows a cross-section of an embodiment for the location of the heating system (4) into the RMT mould (3).

According to the invention, the epoxy resin exothermal reaction is stopped. In the shown embodiment it is stopped by re-circulating a cold fluid into the RTM mould (3) according to a specific cure cycle. Particularly, the recirculated cold fluid is water. Initial water cooling is carried out through specific holes machined on the mould (3). The glass transition temperature for this case is close to room temperature.

In an embodiment shown in the figures a partially cured stringer (1) is joined to a cured skin (2). The stringers (1) preforms are prepared by lay-up of layers with different orientations. The hot-forming of the layers involves a vacuum bag binding of the dry layers in furnace during 1 hour at 80ºC. The hot-forming tool allows to prepare two L's and the capping parts necessary to assembly the stringer (1).

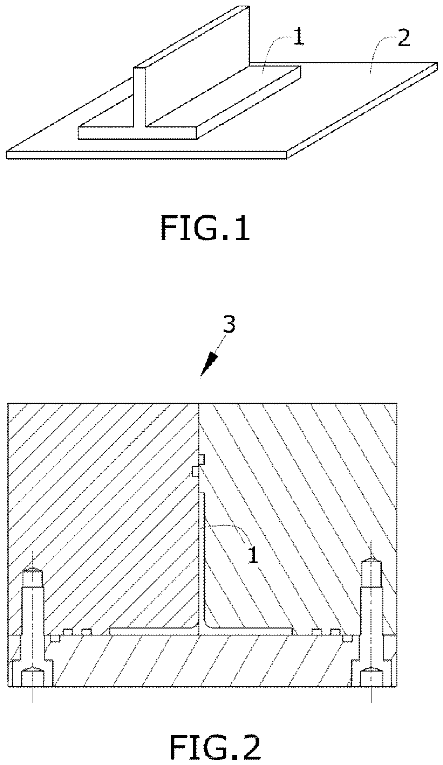

The stringers (1) preforms manufactured according to the procedure indicated in the previous paragraph is injected using a three-part RTM mould (3) as shown in figure 2. Two heating systems (web and flange) are mounted independently at different transversal sections in order to ensure a good temperture homogeneity of the RTM mould (3) during the stringer (1) curing cycle as it is shown in Figure 3. Each heating resistance is instrumented with a K thermocouple to control the power delivered during time. A controlling unit is provided in order to control independently the resistances groups repeated through different cross sections of the RTM mould (3).

In an embodiment, all the inlet/outlet ports of the RTM mould (3) are closed and the temperature is raised up to 140ºC for the semicured stringer (1). Said target temperature is close to 180ºC that represents the fully cured state. The targeted degree of cure is obtained by subjecting the stringer (1) to 140ºC during an specified time. The appropriate curing time was selected on different trials and errors combined with the degree of cure measurement through differential scanning calorimetry.

Provisions were also made for the water circulation at the the three parts of the RTM mould (3). The heaters (4) and coolers (5) where not placed at the same cross section in order to distribute the heating and cooling loads uniformly over the length of the RTM mould (3).

A cure cycle for 50% and 75% of degree of cure was determined. The temperature variations between both tests were low and with negligible impact on the homogeneity of the degree of cure. This was demonstrated by mapping the glass transition temperature over the length and section of the stringers (1).

The RTM mould (3) cooling down from the curing temperature can be carried out in two stages. First, fluid at room temperature is conducted through the mould (3) until the temperature is decreased to, for instance, 20ºC (this temperature is enough to handle and open the mould (3)). The semicured stringer (1) is still in a deformable situation and simple demoulding forces are enough to produce significant deformations. However, an additional temperature drop to, for instance, 0ºC is performed from 20ºC using for instance ethanol as cooling fluid. This last operation is done to ensure that the manipulation of the semicured stringer (1) is correct without any external deformation imposed by the operator. Moreover, the tackiness of the semicured resin at room temperature is high for handling and cooling down to, for instance, -5ºC helps in the manipulation of the material.

The over-cooling procedure facilitates the extraction of the semicured first part (1) from the mould (3). In the disclosed embodiment, the semicured stringers (1) were stored first in fridge at a temperature close to the target cooled temperature, for instance, at 2ºC, to maintain the degree of cure and, when necessary, submitted to trimming and machining operations prior to the integration with the prepreg skins (2).

Trimming and machining operations in semicured materials could potentially be difficult due to the semicured state of the resin. Direct cutting with disk is not allowed as the semicured resin is not able to support fibers. The semicured resin is deformable and with the friction and heat generated during machining, the resin became softer allowing the fabric tows to move free inducing difficulties in the trimming by material blunting, ply delamination, etc. Therefore, specific trimming procedures are applied to reduce such difficulties delivering stringers (1) with a controlled final shape prior to the integration with prepreg skins (2). More specifically the laminate edges are clampled during trimming.

The prepreg skins (2) are prepared by lay-up with unidirectional prepreg in different orientations and with the aid of a flat steel plate used for lay up and curing. The steel plate was engraved in both sides with scribe lines to help during the lay-up and trimming operations. Four pins were inserted in the plates to serve as guides for caul plates (6, 7, 8) during the consolidation in the autoclave.

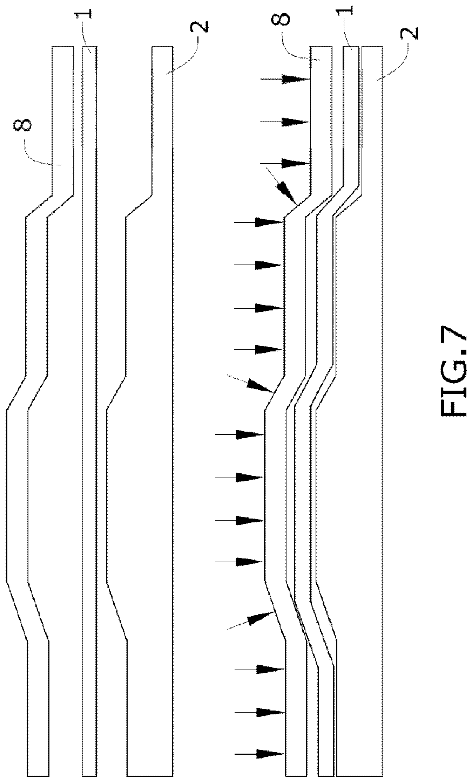

Angular (7) and plane (6) caul plates adapted to the shape of the stringer (1) are provided. Additionally, Figure 7 shows a first part (1) in the form of a panel and a prepreg skin (2) being the caul plate (8) with the shape of the skin (2).

In all the cases, assembly of the first and second parts (1, 2) is performed in an autoclave and by inserting a structural adhesive between both parts (1, 2).

## Claims

1. Method for manufacturing composite parts, wherein at least a first composite part (1) is joined to a second composite part (2), **characterised in that** it comprises the following steps:
- providing the first composite part (1) preform into a resin transfer mould (3),
- heating said first part (1) into the resin transfer mould (3) for performing a curing cycle of the first part,
- cooling said first part (1) by recirculating a fluid into the mould (3) before the curing cycle is completed so that a semi-cured first part (1) is obtained,
- performing the cooling step in two stages, a first stage in which a first fluid is conducted through the mould (3) until the temperature of the first composite part (1) is decreased at room temperature and a second stage having an additional drop of the temperature,
- joining the semi-cured first part (1) to a cured prepreg second part (2) for obtaining the final composite part.

2. Method for manufacturing composite parts, according to claim 1, wherein the joining between the semi-cured first part (1) and the cured prepreg second part (2) is performed by inserting a structural adhesive between both parts (1, 2).

3. Method for manufacturing composite parts, according to any preceding claim, wherein the joining between the semi-cured first part (1) and the cured prepreg second part (2) is performed in an autoclave.

4. Method for manufacturing composite parts, according to any preceding claims 1 or 2, wherein the joining between the semi-cured first part (1) and the cured prepreg second part (2) is performed by a mechanical press.

5. Method for manufacturing composite parts, according to any preceding claims 1 or 2, wherein the joining between the semi-cured first part (1) and the cured prepreg second part (2) is performed by pneumatic or hydraulic means.

6. Method for manufacturing composite parts, according to any preceding claim, wherein before providing the first composite part (1) into the resin transfer mould (3) said first composite part (1) is hot formed.

7. Method for manufacturing composite parts, according to any preceding claim, wherein the semi-cured first part (1) is stored at a temperature close to the target cooled temperature to maintain the degree of cure prior to the subsequent integration with the cured prepreg second part (2).

8. Method for manufacturing composite parts, according to claim 1, wherein the fluid is water.

9. Method for manufacturing composite parts, according to claim 1, wherein the additional drop of the temperature is until -5ºC.

10. Method for manufacturing composite parts, according to claim 1, wherein the additional drop of the temperature is until 0ºC.

11. Resin Transfer Mould (3) for manufacturing composite parts that comprises a cavity for inserting a composite part (1) preform **characterised in that** it further comprises a number of independent heat resistances (4) and a cooling sytem (5) that allow a control of the temperature of the composite part (1),
- the heat resistances (4) being configured to heat the composite part (1) preform for performing a curing cycle of the first part, and
- the cooling system comprising:
• means for cooling the composite part (1) preform, said means configured for recirculating a fluid into the mould (3) before the curing cycle is completed so that a semi-cured first part (1) is obtained, and
• means for performing the cooling step in two stages, configured for conducting, in a first stage, a first fluid at room temperature through the mould (3) until the temperature of the first composite part (1) is decreased at room temperature and configured for providing an additional drop of the temperature, in a second stage.

12. Resin Transfer Mould (3) for manufacturing composite parts, according to claim 11, wherein the heat resistances (4) and the cooling system (5) are not placed at the same cross section of the mould (3) in order to distribute the heating and cooling loads uniformly over the length of the mould (3).

## Patentansprüche

1. Verfahren zur Herstellung von Verbundteilen, wobei mindestens ein erstes Verbundteil (1) an ein zweites Verbundteil (2) angefügt wird, **dadurch gekennzeichnet, dass** es die folgenden Schritte umfasst:
- Bereitstellen der Vorform des ersten Verbundteils (1) in eine Harzinjektionsform (3) hinein,
- Erwärmen des ersten Teils (1) in die Harzinjektionsform (3) hinein, um einen Härtungszyklus des ersten Teils durchzuführen,
- Kühlen des ersten Teils (1) durch Rezirkulieren eines Fluids in die Form (3) hinein, bevor der Härtungszyklus abgeschlossen ist, so dass ein halbgehärtetes erstes Teil (1) erhalten wird,
- Durchführen des Kühlschritts in zwei Stufen, einer ersten Stufe, in der ein erstes Fluid durch die Form (3) hindurch geführt wird, bis die Temperatur des ersten Verbundteils (1) auf Raumtemperatur herabgesetzt wird, und einer zweiten Stufe mit einem zusätzlichen Temperaturabfall,
- Anfügen des halbgehärteten ersten Teils (1) an ein gehärtetes zweites Teil (2), welches ein Prepreg ist, zum Erhalten des endgültigen Verbundteils.

2. Verfahren zur Herstellung von Verbundteilen nach Anspruch 1, wobei das Anfügen zwischen dem halbgehärteten ersten Teil (1) und dem gehärteten zweiten Teil (2), welches ein Prepreg ist, durchgeführt wird, indem ein Strukturkleber zwischen beiden Teilen (1, 2) eingefügt wird.

3. Verfahren zur Herstellung von Verbundteilen nach einem der vorhergehenden Ansprüche, wobei das Anfügen zwischen dem halbgehärteten ersten Teil (1) und dem gehärteten zweiten Teil (2), welches ein Prepreg ist, in einem Autoklaven durchgeführt wird.

4. Verfahren zur Herstellung von Verbundteilen nach einem der vorhergehenden Ansprüche 1 oder 2, wobei das Anfügen zwischen dem halbgehärteten ersten Teil (1) und dem gehärteten zweiten Teil (2), welches ein Prepreg ist, mithilfe einer mechanischen Presse durchgeführt wird.

5. Verfahren zur Herstellung von Verbundteilen nach einem der vorhergehenden Ansprüche 1 oder 2, wobei das Anfügen zwischen dem halbgehärteten ersten Teil (1) und dem gehärteten zweiten Teil (2), welches ein Prepreg ist, mithilfe eines pneumatischen oder hydraulischen Mittels durchgeführt wird.

6. Verfahren zur Herstellung von Verbundteilen nach einem der vorhergehenden Ansprüche, wobei das erste Verbundteil (1) heißgeformt wird, bevor das erste Verbundteil (1) in die Harzinjektionsform (3) hinein bereitgestellt wird.

7. Verfahren zur Herstellung von Verbundteilen nach einem der vorhergehenden Ansprüche, wobei das halbgehärtete erste Teil (1) bei einer Temperatur nahe der angestrebten gekühlten Temperatur gelagert wird, um den Härtungsgrad vor der nachfolgenden Integration mit dem gehärteten zweiten Teil (2), welches ein Prepreg ist, aufrechtzuerhalten.

8. Verfahren zur Herstellung von Verbundteilen nach Anspruch 1, wobei das Fluid Wasser ist.

9. Verfahren zur Herstellung von Verbundteilen nach Anspruch 1, wobei der zusätzliche Temperaturabfall bis auf -5 °C erfolgt.

10. Verfahren zur Herstellung von Verbundteilen nach Anspruch 1, wobei der zusätzliche Temperaturabfall bis auf 0 °C erfolgt.

11. Harzinjektionsform (3) zur Herstellung von Verbundteilen, die einen Hohlraum zum Einfügen einer Vorform eines Verbundteils (1) umfassen, **dadurch gekennzeichnet, dass** sie des Weiteren eine Anzahl an unabhängigen Wärmewiderständen (4) und ein Kühlsystem (5) umfasst, welches eine Steuerung der Temperatur des Verbundteils (1) zulässt,
- wobei die Wärmewiderstände (4) ausgestaltet sind, um die Vorform des Verbundteils (1) zu erwärmen, um einen Härtungszyklus des ersten Teils durchzuführen, und
- wobei das Kühlsystem umfasst:
• Mittel zum Kühlen der Vorform des Verbundteils (1), wobei das Mittel zum Rezirkulieren eines Fluids in die Form (3) hinein ausgestaltet ist, bevor der Härtungszyklus abgeschlossen ist, so dass ein halbgehärtetes erstes Teil (1) erhalten wird, und
• Mittel zum Durchführen des Kühlschritts in zwei Stufen, die ausgestaltet sind, um in einer ersten Stufe ein erstes Fluid mit Raumtemperatur durch die Form (3) hindurch zu führen, bis die Temperatur des ersten Verbundteils (1) auf Raumtemperatur herabgesetzt ist, und ausgestaltet sind, um in einer zweiten Stufe einen zusätzlichen Temperaturabfall bereitzustellen.

12. Harzinjektionsform (3) zur Herstellung von Verbundteilen nach Anspruch 11, wobei die Wärmewiderstände (4) und das Kühlsystem (5) nicht an demselben Querschnitt der Form (3) platziert sind, um die Heiz- und Kühllasten gleichförmig über die Länge der Form (3) zu verteilen.

## Revendications

1. Procédé de fabrication de pièces composites, dans lequel au moins une première pièce composite (1) est assemblée à une deuxième pièce composite (2), **caractérisé en ce qu'**il comprend les étapes suivantes :
- obtention d'une préforme de la première pièce composite (1) à l'intérieur d'un moule de transfert de résine (3),
- chauffage de ladite première pièce (1) à l'intérieur du moule de transfert de résine (3) pour effectuer un cycle de durcissement de la première pièce,
- refroidissement de ladite première pièce (1) par recirculation d'un fluide à l'intérieur du moule (3) avant que le cycle de durcissement soit achevé de telle sorte qu'une première pièce semi-durcie (1) est obtenue,
- réalisation de l'étape de refroidissement en deux phases, une première phase dans laquelle un premier fluide est acheminé à travers le moule (3) jusqu'à ce que la température de la première pièce composite (1) soit abaissée à la température ambiante et une deuxième phase ayant une chute supplémentaire de la température,
- assemblage de la première pièce semi-durcie (1) à une deuxième pièce préimprégnée durcie (2) pour obtenir la pièce composite finale.

2. Procédé de fabrication de pièces composites, selon la revendication 1, dans lequel l'assemblage entre la première pièce semi-durcie (1) et la deuxième pièce préimprégnée durcie (2) est effectué par insertion d'un adhésif structural entre les deux pièces (1, 2).

3. Procédé de fabrication de pièces composites, selon une quelconque revendication précédente, dans lequel l'assemblage entre la première pièce semi-durcie (1) et la deuxième pièce préimprégnée durcie (2) est effectué dans un autoclave.

4. Procédé de fabrication de pièces composites, selon l'une quelconque des revendications 1 et 2 précédentes, dans lequel l'assemblage entre la première pièce semi-durcie (1) et la deuxième pièce préimprégnée durcie (2) est effectué par une presse mécanique.

5. Procédé de fabrication de pièces composites, selon l'une quelconque des revendications 1 et 2 précédentes, dans lequel l'assemblage entre la première pièce semi-durcie (1) et la deuxième pièce préimprégnée durcie (2) est effectué par des moyens pneumatiques ou hydrauliques.

6. Procédé de fabrication de pièces composites, selon une quelconque revendication précédente, dans lequel, avant d'obtenir la première pièce composite (1) à l'intérieur du moule de transfert de résine (3), ladite première pièce composite (1) est formée à chaud.

7. Procédé de fabrication de pièces composites, selon une quelconque revendication précédente, dans lequel la première pièce semi-durcie (1) est stockée à une température proche de la température refroidie cible pour maintenir le degré de durcissement avant l'intégration ultérieure avec la deuxième pièce préimprégnée durcie (2) .

8. Procédé de fabrication de pièces composites, selon la revendication 1, dans lequel le fluide est l'eau.

9. Procédé de fabrication de pièces composites, selon la revendication 1, dans lequel la chute supplémentaire de la température se fait jusqu'à -5 °C.

10. Procédé de fabrication de pièces composites, selon la revendication 1, dans lequel la chute supplémentaire de la température se fait jusqu'à 0 °C.

11. Moule de transfert de résine (3) pour la fabrication de pièces composites qui comprend une cavité pour insérer une préforme d'une pièce composite (1), **caractérisé en ce qu'**il comprend en outre un certain nombre de résistances thermiques indépendantes (4) et un système de refroidissement (5) qui permettent une régulation de la température de la pièce composite (1),
- les résistances thermiques (4) étant configurées pour chauffer la préforme de la pièce composite (1) pour effectuer un cycle de durcissement de la première pièce, et
- le système de refroidissement comprenant :
• des moyens pour refroidir la préforme de la pièce composite (1), lesdits moyens étant configurés pour faire recirculer un fluide à l'intérieur du moule (3) avant que le cycle de durcissement soit achevé de telle sorte qu'une première pièce semi-durcie (1) est obtenue, et
• des moyens pour effectuer l'étape de refroidissement en deux phases, configurés pour acheminer, dans une première phase, un premier fluide à température ambiante à travers le moule (3) jusqu'à ce que la température de la première pièce composite (1) soit abaissée à la température ambiante et configurés pour appliquer une chute supplémentaire de la température, dans une deuxième phase.

12. Moule de transfert de résine (3) pour la fabrication de pièces composites, selon la revendication 11, dans lequel les résistances thermiques (4) et le système de refroidissement (5) ne sont pas placés dans la même section transversale du moule (3) afin de répartir les charges de chauffage et de refroidissement uniformément sur la longueur du moule (3).
